**Europäisches Patentamt**

**European Patent Office**

**Office européen des brevets**

(19)

(11) Numéro de publication : **0 401 084 B1**

## (12) FASCICULE DE BREVET EUROPEEN

(45) Date de publication du fascicule du brevet :
29.09.93 Bulletin 93/39

(51) Int. Cl.⁵ : **G01D 5/20**

(21) Numéro de dépôt : **90401360.4**

(22) Date de dépôt : **22.05.90**

(54) **Dispositif à plusieurs capteurs de position angulaire.**

(30) Priorité : **30.05.89 FR 8907058**

(43) Date de publication de la demande :
**05.12.90 Bulletin 90/49**

(45) Mention de la délivrance du brevet :
**29.09.93 Bulletin 93/39**

(84) Etats contractants désignés :
**DE ES GB IT SE**

(56) Documents cités :
**EP-A- 0 009 102**
**US-A- 3 032 730**
**US-A- 4 772 815**

(73) Titulaire : **S.N.R. ROULEMENTS**
**Boîte Postale 17 1, rue des Usines**
**F-74010 Annecy Cédex (FR)**

(72) Inventeur : **Lemarquand, Guy**
**Les Vignes**
**F-74370 Pringy (FR)**

(74) Mandataire : **Ernst-Schonberg, Michel**
**REGIE NATIONALE DES USINES RENAULT (S.**
**0267) 8 & 10, avenue Emile Zola**
**F-92109 Boulogne Billancourt Cédex (FR)**

**Description**

La présente invention a pour objet un dispositif de détermination de position angulaire entre deux pièces coaxiales en rotation relative, a réluctance magnétique variable. Elle a également pour objet un dispositif d'application muni de plusieurs capteurs conformes au préambule de la revendication 1.

Le besoin d'appareils de mesure de position angulaire très précis se fait sentir notamment en robotique où il est nécessaire de déterminer avec précision l'angle de travail des articulations des bras des robots. Ce problème est dans une certaine mesure résolu grâce à une série de dispositifs, qui, couplés entre eux ou prolongés par des multiplicateurs d'angle (en particulier des engrenages), permettent de discrétiser les mouvements circulaires avec une grande précision.

La publication US-A-3032730 concerne un transformateur tournant qui permet le passage d'un signal électrique dans un bobinage enserrant une structure ferromagnétique sous l'action d'un flux magnétique engendré par un circuit magnétique en déplacement.

Le signal alternatif que l'on fait passer dans le circuit électrique dépend étroitement de ce flux magnétique qu'il peut donc caractériser. En fonction de leurs caractéristiques, les capteurs permettent d'obtenir la position relative des deux pièces composant le circuit magnétique.

Les appareils qui exploitent ce phénomène et l'appliquent à la détermination de position angulaire comprennent un rotor et un stator munis de dents séparées par un entrefer. La notion de stator et de rotor est toutefois peu significative pour cette application de capteurs de position angulaire, car ces deux concepts peuvent désigner aussi bien l'inducteur que l'induit, la pièce intérieure comme la pièce extérieure, ou même deux pièces disposées parallèlement de part et d'autre d'un entrefer plan. Cette remarque concerne aussi l'invention.

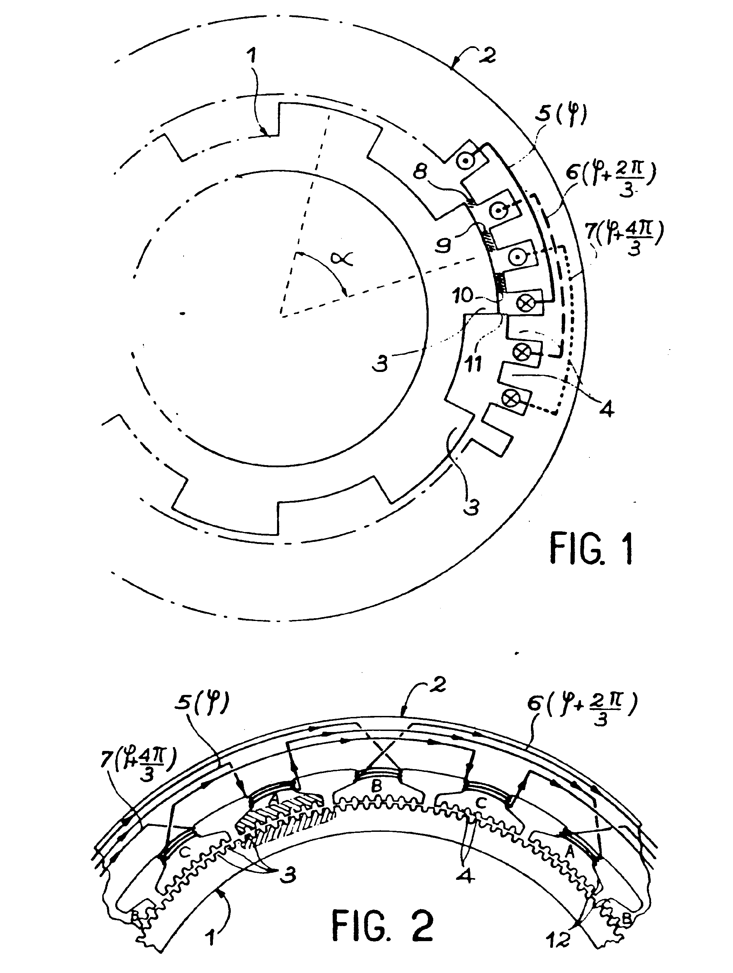

Les capteurs de position angulaire développés jusqu'ici et aptes à fournir des mesures de grande précision sont de deux types dont des exemples sont représentés figures 1 et 2. D'après le premier de ces exemples, la pièce ne portant pas les bobinages est munie de M motifs (plots ou dents) régulièrement répartis sur sa circonférence, alors que la pièce inductrice porte n x M motifs plus petits dont chaque groupe de n motifs est entouré d'un bobinage alimenté par un courant alternatif dont la phase diffère de $2\pi/n$ de celle qui alimente les bobinages voisins, à l'exception du bobinage diphasé pour lequel 4M motifs sont nécessaires.

Le capteur comprend donc des motifs répétitifs décalés de $2\pi/M$ radians. on dit que l'angle électrique est égal à l'angle mécanique multiplié par M.

Si M est important, les mesures sont en principe plus précises, mais on aboutit vite à des limitations dues aux incertitudes d'usinage des pièces, surtout si on alimente par des courants polyphasés qui nécessitent des motifs plus nombreux sur la pièce munie des bobinages.

Un deuxième type de capteur, représenté figure 2 et tiré de l'article "A New High Accuracy Angular Position Transducer", PCIM, septembre 1985, pp. 55, par I.B. Cushing, montre M râteliers sur le rotor et le stator munis chacun d'un nombre quasi-égal de dents. Les bobinages, disposés ici sur le stator, sont alimentés par des courants alternatifs polyphasés. La caractéristique majeure de ce capteur consiste en ce que les râteliers d'une des pièces ne sont pas espacés régulièrement, de telle sorte que les dents des râteliers portant les bobinages de même phase sont toujours disposées de manière semblable vis-à-vis des dents de l'autre pièce. De plus, une rotation du rotor qui amène un râtelier du stator à être disposé, vis-à-vis des dents du rotor, de la même façon qu'un autre râtelier du stator dans la position de départ, correspond à un angle électrique de x, x étant le déphasage entre les courants qui alimentent les bobinages de ces deux râteliers du stator.

Le principe est donc le même que dans le cas précédent, et ici encore les tolérances de fabrication imposent des limitations pratiques au nombre de motifs que l'on peut ddisposer.

La présente invention permet de tourner cette limitation au moyen d'un capteur de position angulaire de fabrication simple constitué notamment d'un rotor et d'un stator, ce dernier possédant deux fois plus de dents que le rotor et qui sont disposées régulièrement ; selon la présente invention, plusieurs de ces capteurs sont associés en parallèle et forment un dispositif d'application qui permet d'obtenir un pas angulaire plus fin.

Elle concerne un ensemble de détermination de position angulaire de deux pièces coaxiales en rotation relative, conforme aux caractéristiques de la revendication 1.

Selon un mode préféré de réalisation de l'ensemble dé détermination de position angulaire selon l'invention, l'angle de décalage entre les dents du rotor et du stator d'un capteur quelconque peut se déduire de l'angle correspondant chez tout autre capteur par addition ou soustraction du quotient de $2\pi$ par le produit du nombre de dents du rotor et du nombre de capteurs, ou par un multiple de ce quotient inférieur au résultat de la division de $2\pi$ par le nombre de dents du rotor, ce quotient ou tout multiple ainsi défini représentant de plus la différence de décalage entre les dents du stator et du rotor de deux des capteurs utilisés ; une exception existant toutefois dans le cas de deux capteurs dont le décalage entre les dents du stator et du rotor différera de préférence du quotient de $\pi/2$ ou de $2\pi/3$ par le nombre de dents du rotor.

Selon une réalisation avantageuse de l'invention, le rapport entre la hauteur des dents de section à peu près rectangulaire des stators et des rotors et l'arc embrassé par l'extrémité de celles-ci est compris entre 0,5 et 2, et d'autre part l'angle correspondant à l'arc total embrassé par les dents du stator comme du rotor est compris entre $\pi/3$ et $\pi$.

De toute manière, l'invention sera mieux comprise à l'aide du commentaire des figures énumérées ci-dessous et données à titre illustratif et non limitatif :

- La figure 1 représente une vue axiale d'un capteur selon l'art antérieur,
- La figure 2 représente une vue axiale d'un autre capteur selon l'art antérieur,
- La figure 3 représente une vue axiale d'un capteur utilisé pour l'invention,
- La figure 4 représente une perspective simplifiée d'une réalisation possible de l'invention,
- La figure 5 représente une coupe diamétrale d'un autre mode de réalisation de l'invention,
- Les figures 6 à 8 représentent divers types de signaux susceptibles d'être obtenus par des machines à réluctance.

La figure 1 représente donc un appareil d'un type connu composé d'un rotor 1 pourvu de M dents 3 et d'un stator 2 pourvu de 3xM dents 4.

L'alimentation électrique est assurée par un système triphasé composé des bobinages 5, 6 et 7.

Chaque dent 3 est donc placée en regard de trois dents 4 ; une rotation du rotor 1 d'un angle $x = 2\pi/M$ permet d'obtenir une configuration identique, ce qui correspond à un angle électrique de $2\pi$. Si la rotation du rotor 1 est moins importante, la position relative du rotor 1 et du stator 2 se trouve modifiée : les flux magnétiques qui passent par les entrefers tels que 8, 9, 10 et 11 sont modifiés en intensité par suite de la variation de perméance entre les dents du stator 2 et du rotor 1. Il en résulte que la tension aux bornes des bobinages 5, 6 et 7 - en supposant l'intensité constante - varie continûment au cours d'une rotation du rotor 1, avec une période correspondant à l'angle $\alpha$. La loi de cette variation est très difficile à formuler à cause de la complexité des phénomènes et dépend largement des géométries des dents 3 et 4 (entrefer, hauteur, étendue de l'arc embrassé, formes relatives de ces dents) ainsi que de la position des bobinages 5 à 7. Il est toutefois possible d'obtenir des variations pratiquement sinusoidales de cette intensité en fonction de l'angle de rotation, ce qui est très avantageux pour l'exploitation des mesures.

La figure 2 représente un autre exemple connu permettant d'obtenir un angle électrique de $2\pi$ correspondant à une fraction de l'angle de périodicité mécanique. Ici, les dents 4 du rotor 2 sont portées par des râteliers 12 qui les distribuent en groupes alimentés par des tensions électriques triphasées. On remarque que dans cette position, les dents 4 des râteliers 12 désignés par B sont en face des dents 3 du rotor 1, contrairement aux dents des râteliers A et C. Le décalage angulaire des dents A par rapport aux dents 3 est égal au tiers de l'angle qui sépare deux dents 3 consécutives, celui des dents C est égal aux deux tiers de cet angle, ce qui est lié au déphasage électrique de $2\pi/3$ entre ces trois groupes . Il faut donc les décaler de l'angle mécanique correspondant à ce décalage, c'est-à-dire $2\pi/3M$, où M est le nombre de dents 3.

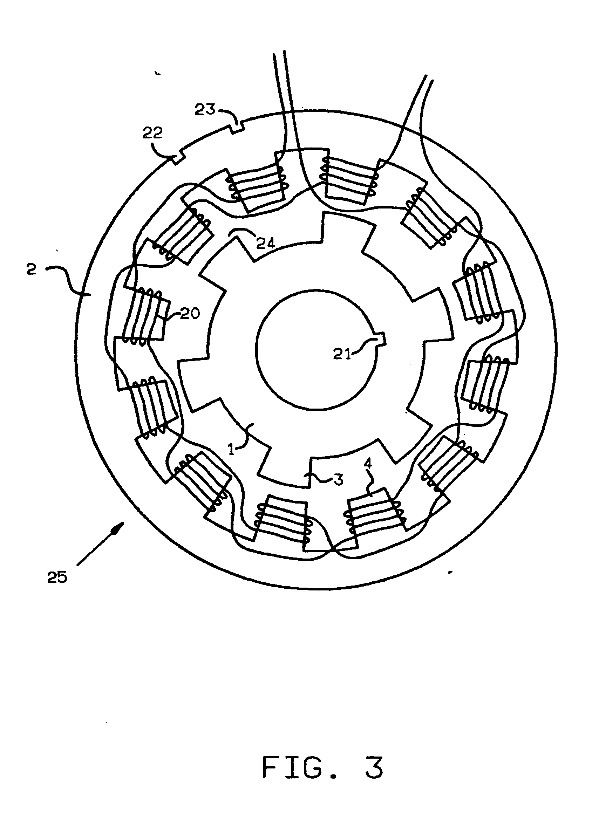

Cette figure 2, qui représente une réalisation concrète d'un capteur angulaire, donne une idée des précisions que l'on peut espérer obtenir, ce qui a pour contrepartie un usinage délicat et coûteux du rotor 2. C'est pourquoi les capteurs utilisés pour l'invention et représentés figure 3 renoncent à cette disposition et comprennent un rotor 1 et un stator 2, munis certes comme précédemment de dents 3 et 4 respectivement.

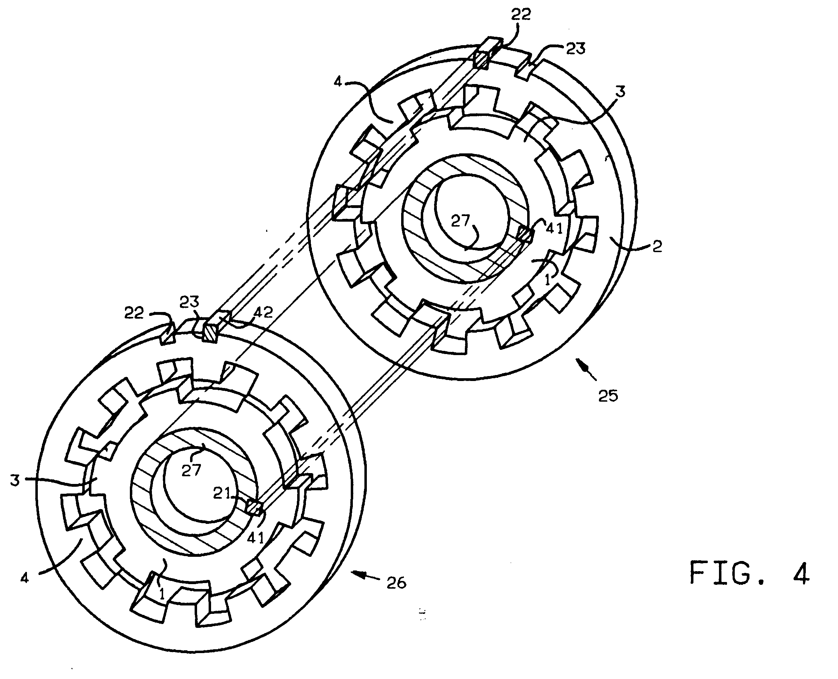

Le courant électrique est donc monophasé. Le rotor 1 est évidé et muni d'une rainure de clavette 21 sur son diamètre intérieur, le stator 2 de deux rainures de clavette 22 et 23 sur son diamètre extérieur. Les clavettes utilisées à cette fin portent respectivement les références 41 et 42 (figure 4).

Avant de poursuivre la description de l'invention, il convient de rappeler ce qui a été dit plus haut de façon générale à propos de ces capteurs : le rotor peut être à l'intérieur ou à l'extérieur du stator, ou même à côté de celui-ci sur le même arbre, l'entrefer étant alors plan ; de même, le bobinage peut être porté par le stator ou par le rotor. D'une façon générale, les termes "stator" et "rotor" ont été utilisés pour alléger la présente description et ne sauraient être interprétés de manière à restreindre le cadre de l'invention.

Au cours de la rotation du rotor 1, la forme de l'entrefer 24 est modifiée et, comme pour les exemples précédents, la perméance du circuit magnétique constitué par le stator 1 et le rotor 2 varie, ainsi que le courant qui circule dans la bobine 20.

Avec le capteur de la figure 3, on obtient un résultat dont la décomposition en série de Fourier donne une tension :

$$v = (v_O + v_1 \cos\theta + \ldots + v_i \cos i\theta + \ldots) \sin \Omega t.$$

L'idéal serait de pouvoir annuler tous les $v_i$ autres que $v_1$.

Le montage différentiel des deux bobinages monophasés permet d'annuler le terme $v_o$. Par contre, l'influence des termes $v_2$, $v_3$, etc. peut être réduite grâce à une géométrie judicieuse des dents.

On arrive pratiquement à une tension $v = v_1 \cos\theta . \sin \Omega t$ si l'intensité du courant est constante, dont l'exploitation est bien plus simple. On peut aussi, sans sortir du cadre de l'invention, délivrer un signal de tension constante et c'est alors son intensité qui varie de façon quasi-sinusoidale en fonction de $\theta$.

$i = (i_1 \cos\theta + \ldots + i_n \cos n\theta) \sin \Omega t$ : le traitement électronique de ce signal est le même.

La figure 4 représente deux capteurs 25 et 26 semblables et du type décrit figure 3.

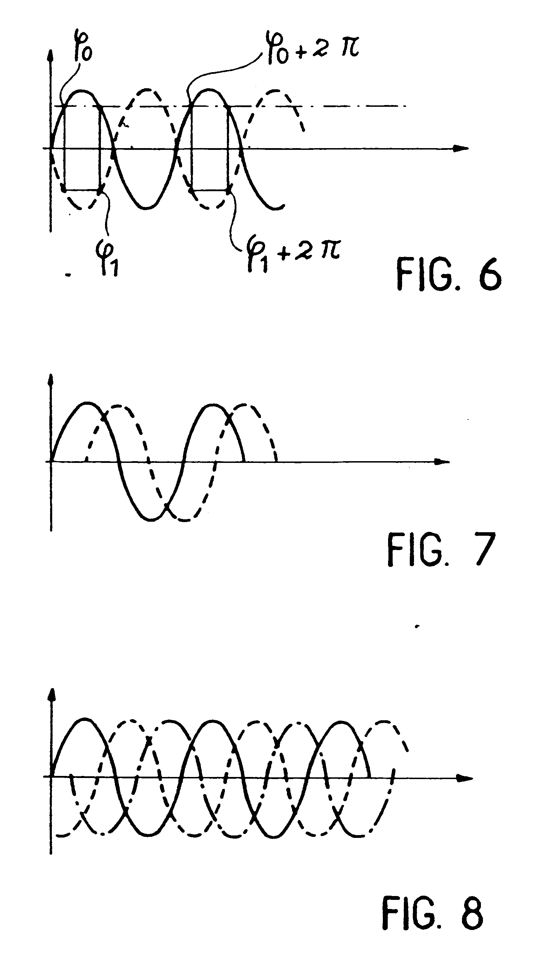

Les signaux fournis par les capteurs en fonction de la rotation des rotors seraient représentés par la figure 8 si on suppose que leur réponse est non seulement périodique mais sinusoidale.

Toutefois, il existe une exception quand les capteurs sont au nombre de deux. L'application du principe exposé ci-dessus aboutirait à placer les deux capteurs à un angle électrique égal à $\pi/2$. La figure 6 montre alors que des angles électriques $\phi$O et $\phi$l non espacés de $2\pi$ fournissent le même signal sur les deux capteurs. La correspondance biunivoque entre les signaux et l'angle électrique est donc perdue. C'est pourquoi les stators doivent être décalés d'un angle électrique différent. La valeur $\pi/2$ est la plus généralement choisie, quoique $2\pi/3$ soit aussi utilisé. On obtient alors des signaux du type représenté figure 7.

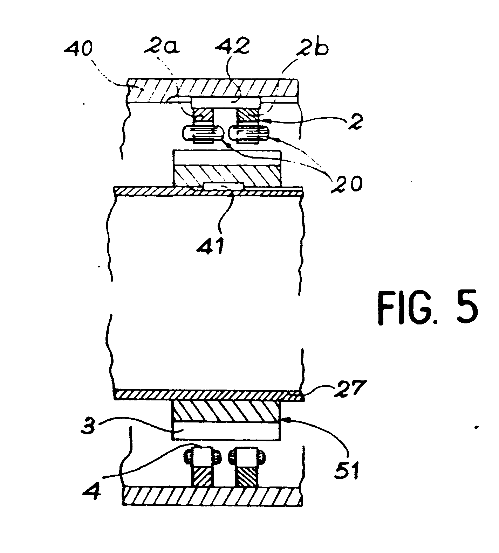

La figure 5représente une variante de cette réalisation de l' invention selon une vue en coupe diamétrale. D'une façon générale, le centrage du rotor 1 sur le stator 2 ne doit pas nécessairement être très précis avec cette construction grâce à l'identité du rôle de toutes les dents : les défauts de positionnement, de circularité et de répartition angulaire des dents 3 et 4 sont beaucoup moins dommageables qu'avec les dispositifs représentés figures 1 et 2. On peut accepter que le centrage soit effectué par des roulements à billes, non représentés ici, disposés sur l'arbre 27 et l'enveloppe 40 ; le dispositif de détermination de position angulaire se limite essentiellement aux capteurs 25 et 26, il est donc très léger.

Le capteur conforme à l'invention est insensible au décalage axial puisqu'il utilise, par principe, la différence des réluctances de ses deux bobinages et que ces réluctances varient dans le même rapport lors d'un décalage axial.

Il est encore possible de réaliser l'ensemble de détermination de position angulaire de manière un peu différente, et non représentée ici, en ajoutant pour chaque capteur 25, 26 un autre bobinage monophasé autour des dents 3 des rotors 1 ou 51 : l'un des bobinages est alors utilisé pour l'alimentation électrique (nécessairement celui du rotor 51 dans les réalisations où ce rotor est unique, comme c'est le cas sur la figure 5), l'autre bobinage de chaque capteur 25, 26 reste utilisé pour recueillir les signaux électriques induits.

On peut enfin utiliser isolément un capteur 25 tel que celui décrit figure 3 : la tension aux bornes du bobinage 20 et l'intensité du signal qui le parcourt peuvent être comparées par l'intermédiaire d'un circuit dérivé, composé par exemple d'une résistance fixe qui fait correspondre une intensité à la tension aux bornes du bobinage 20. La comparaison porte alors sur l'intensité du signal qui parcourt ce bobinage 20 et l'intensité du signal qui parcourt le circuit dérivé.

L'inconvénient de l'emploi d'un capteur 25 isolé consiste en ce qu'on ne peut effectuer des mesures que sur un angle électrique égal à $\pi$ , car il y a indétermination si on veut mesurer sur des intervalles plus grands. De plus, la précision obtenue avec un seul capteur 25 sera beaucoup moins bonne.

Dans toutes ces réalisations de l'invention, l'exploitation électronique des signaux obtenus se fait au moyen de circuits déjà connus, tels ceux indiqués dans l'ouvrage "Synchro Conversion Handbook", ILC Data Device Corporation, 1982.

Le capteur 25 de position angulaire présente ainsi divers avantages. Sa forme est très simple et ne nécessite pas une fabrication compliquée. En outre, le choix d'un bobinage monophasé permet de limiter les conséquences d'une mauvaise coaxialité des axes des pièces 27, 40 supportant le rotor 1 et le stator 2 ou d'irrégularités d'usinage des dents 3 et 4 : les erreurs ainsi engendrées sont moyennées sur tout l'entrefer 24 et donc largement atténuées.

Des avantages supplémentaires sont apportés par l'emploi d'un ensemble de position angulaire composé d'une pluralité de ces capteurs 25 : il est possible d'obtenir des discrétisations angulaires plus fines, et d'autre part, l'emploi d'un seul rotor débordant 51 limite les conséquences d'un mauvais positionnement axial des pièces porteuses 27 et 40. Le nombre de capteurs 25 que l'on peut disposer en parallèle n'est théoriquement pas limité, mais comme le réglage par les clavettes 41 et 42 est très précis, ce nombre est certainement élevé en pratique. On doit donc pouvoir obtenir des mesures de position angulaire très précises grâce à l'invention, qui est donc susceptible d'être très utile notamment en robotique.

**Revendications**

1. Dispositif de détermination de position angulaire de deux pièces coaxiales en rotation relative (27, 40) à capteurs de position angulaire dont chacun possède un rotor (1) et un stator (2) ferromagnétiques denté dont le nombre de dents est égal au double du nombre de dents du rotor, et dans lequel un bobinage (20) monophasé disposé sur le stator (2) ou le rotor (1) permettent de mesurer le flux magnétique qui parcourt ce capteur (25), tandis qu'un système électronique mesure la modulation du signal électrique parcourant ce bobinage, caractérisé en ce que la pluralité de capteurs (25, 26), porte des moyens de liaison mécanique (41, 42) entre les rotors (1) d'une part et les stators (2) d'autre part, de telle sorte que l'angle de décalage entre les dents (3) du rotor (1) et les dents (4) du stator (2) d'un capteur (25) quelconque est différent de l'angle correspondant des autres capteurs tandis qu'un ensemble électronique combine les signaux issus des systèmes électroniques des différents capteurs (25).

2. Dispositif suivant la revendication 1, caractérisé en ce qu'il comprend au moins trois capteurs (25) et en ce que l'angle de décalage entre les dents (3) du rotor (1) et les dents (4) du stator (2) d'un capteur (25) quelconque peut se déduire de l'angle correspondant chez tout autre capteur (25) par addition ou soustraction du quotient de $2\pi$ par le produit du nombre de dents (3) du rotor (1) et du nombre de capteurs (25), ou par un multiple de ce quotient inférieur au résultat de la division de $2\pi$ par le nombre de dents (3) du rotor (1), ce quotient ou tout multiple ainsi défini représentant de plus la différence de décalage entre les dents (3) du rotor (1) et les dents (4) du stator (2) de deux des capteurs (25, 26) utilisés.

3. Dispositif suivant la revendication 1, caractérisé en ce qu'il comprend deux capteurs (25, 26) et en ce que la différence d'angle de décalage entre les dents (3) du rotor (1) et les dents (4) du stator (2) des deux capteurs (25, 26) est égale au quotient de $\pi/2$ ou $\pi/3$ divisé par le nombre de dents (3) du rotor.

4. Dispositif suivant l'une quelconque des revendications 1 à 3, caractérisé en ce que les dents (3) des rotors (1) de l'ensemble de capteurs (25) sont en prolongement axial.

5. Dispositif suivant l'une quelconque des revendications 1 à 4, caractérisé en ce que l'ensemble des rotors (1) constitue une pièce unitaire (51) dentée dont les dents (3) sont situées en vis-à-vis des dents (4) des stators (2) pour que ses dents (3) puissent venir en regard des dents (4) de tous les stators (2).

**Patentansprüche**

1. Vorrichtung zur Bestimmung der Winkelposition zweier koaxialer, sich relativ zueinander drehender Teile (27,40) mittels Winkelpositionssensoren, deren jeder einen mit Zähnen versehenen ferromagnetischen Rotor (1) aufweist und einen mit Zähnen versehenen ferromagnetischen Stator (2) aufweist, dessen Anzahl der Zähne gleich der doppelten Anzahl der Zähne des Rotors ist, und wobei eine am Stator (2) oder Rotor (1) angebrachte, einphasige Wicklung (20) eine Messung des den Sensor durchsetzenden magnetischen Flusses ermöglicht, während ein elektronisches System die Modulation des die Wicklung durchfließenden elektrischen Signals mißt, **dadurch gekennzeichnet,** daß die Vielzahl von Sensoren (25,26) mechanische Verbindungsanordnungen (41,42) zwischen den Rotoren (1) einerseits und den Statoren (2) andererseits trägt, derart, daß der Verschiebewinkel zwischen den Zähnen (3) des Rotors (1) und den Zähnen (4) des Stators (2) eines beliebigen Sensors (25) verschieden ist vom entsprechenden Winkel der anderen Sensoren, und daß eine elektronische Anordnung, die von den elektronischen Systemen der verschiedenen Sensoren (25) abgegebenen Signale kombiniert.

2. Vorrichtung nach Anspruch 1, **dadurch gekennzeichnet,** daß sie wenigstens drei Sensoren (25) aufweist, und daß der Verschiebewinkel zwischen den Zähnen (3) des Rotors (1) und den Zähnen (4) des Stators (2) eines beliebigen Sensors (25) ableitbar ist vom zugehörigen Winkel bei jedem anderen Sensor (25) durch Addition oder Subtraktion des Quotienten aus $2\pi$ und dem Produkt der Anzahl der Zähne (3) des Rotors (1) und der Anzahl der Sensoren (25), oder einem Mehrfachen dieses Quotienten, das kleiner ist als das Resultat der Division von $2\pi$ durch die Anzahl der Zähne (3) des Rotors (1), wobei dieser Quotient oder jedes derart gebildete Vielfache außerdem den Verschiebeunterschied zwischen den Zähnen (3) des Rotors (1) und den Zähnen (4) des Stators (2) zweier verwendeter Sensoren (25,26) darstellt.

3. Vorrichtung nach Anspruch 1, **dadurch gekennzeichnet,** daß sie zwei Sensoren (25,26) aufweist, und daß der Unterschied der Winkelverschiebung zwischen den Zähnen (3) des Rotors (1) und den Zähnen (4) des Stators (2) der beiden Sensoren (25,26) gleich dem Quotienten aus $\pi/2$ oder $2\pi/3$ und der Anzahl der Zähne (3) des Rotors ist.

4. Vorrichtung nach einem der Ansprüche 1 bis 3, **dadurch gekennzeichnet,** daß die Zähne (3) der Rotoren (1) der Sensoranordnung (25) axial verlängert sind.

5. Vorrichtung nach einem der Ansprüche 1 bis 4, **dadurch gekennzeichnet,** daß die Anordnung der Rotoren (1) ein einstückiges gezahntes Teil (51) darstellen, dessen Zähne (3) gegenüber den Zähnen (4) der Statoren (2) angeordnet sind, so daß die Zähne (3) gegenüber den Zähnen (4) aller Statoren (2) liegen.

**Claims**

1. A device for determining the angular position of two coaxial components in relative rotation (27, 40), having angular position sensors each of which comprises a toothed ferromagnetic rotor (1) and stator (2), whose number of teeth is equal to double the number of teeth of the rotor, and in which a monophase winding (20) disposed on the stator (2) or the rotor (1) makes it possible to measure the magnetic flux which passes through the sensor (25), while an electronic system measures the modulation of the electrical signal passing through this winding, characterized in that the plurality of sensors (25, 26) bears mechanical connection means (41, 42) between the rotors (1) and the stators (2) such that the angle of offset between the teeth (3) of the rotor (1) and the teeth (4) of the stator (2) of any sensor (25) is different from the corresponding angle of the other sensors, while an electronic assembly combines the signals from the electronic systems of the different sensors (25).

2. A device as claimed in claim 1, characterized in that it comprises at least three sensors (25) and in that the angle of offset between the teeth (3) of the rotor (1) and the teeth (4) of the stator (2) of any sensor (25) may be deduced from the corresponding angle of any other sensor (25) by adding or subtracting the quotient of $2\pi$ by the product of the number of teeth (3) of the rotor (1) and the number of sensors (25), or by a multiple of this quotient lower than the result of the division of $2\pi$ by the number of teeth (3) of the rotor (1), this quotient or any multiple defined in this way also representing the offset difference between the teeth (3) of the rotor (1) and the teeth (4) of the stator (2) of two of the sensors (25, 26) used.

3. A device as claimed in claim 1, characterized in that it comprises two sensors (25, 26) and in that the difference in angle of offset between the teeth (3) of the rotor (1) and the teeth (4) of the stator (2) of the two sensors (25, 26) is equal to the quotient of $\pi/2$ or $2\pi/3$ divided by the number of teeth (3) of the rotor.

4. A device as claimed in any one of claims 1 to 3, characterized in that the teeth (3) of the rotors (1) of all the sensors (25) are in axial prolongation.

5. A device as claimed in any one of claims 1 to 4, characterized in that the assembly of rotors (1) forms a unit toothed component (51) whose teeth (3) are disposed facing the teeth (4) of the stators (2) so that its teeth (3) may be disposed opposite the teeth (4) of all the stators (2).

FIG. 1

FIG. 2

FIG. 3

FIG. 4

FIG. 5

FIG. 6

FIG. 7

FIG. 8